# EUROPEAN PATENT APPLICATION

(11) **EP 4 386 776 A1**
(43) Date of publication of application: **19.06.2024**
(21) Application number: 22894436.9
(22) Date of filing: 21.09.2022
(51) Int. Cl.: G21C 3/352, G21C 3/34, G21C 3/356

(54) **FUEL ASSEMBLY GRID, FUEL ASSEMBLY, AND PRESSURIZED WATER REACTOR CORE**

(30) Priority: 18.11.2021 CN 202111371365
(71) Applicant: Nuclear Power Institute of China, Chengdu, Sichuan 610213 (CN)
(72) Inventor: JIAO, Yongjun, Chengdu, Sichuan 610213 (CN); WU, Lin, Chengdu, Sichuan 610213 (CN); CHEN, Ping, Chengdu, Sichuan 610213 (CN); XIAO, Zhong, Chengdu, Sichuan 610213 (CN); RU, Jun, Chengdu, Sichuan 610213 (CN); LI, Qing, Chengdu, Sichuan 610213 (CN); PU, Zengping, Chengdu, Sichuan 610213 (CN); LEI, Tao, Chengdu, Sichuan 610213 (CN); DU, Sijia, Chengdu, Sichuan 610213 (CN); ZHANG, Kun, Chengdu, Sichuan 610213 (CN); GUO, Xiaoming, Chengdu, Sichuan 610213 (CN); SU, Min, Chengdu, Sichuan 610213 (CN); LI, Yuanming, Chengdu, Sichuan 610213 (CN); ZHENG, Meiyin, Chengdu, Sichuan 610213 (CN); WU, Lei, Chengdu, Sichuan 610213 (CN)
(74) Representative: Sun, Yiming
(86) International application number: PCT/CN2022/120185
(87) International publication number: WO 2023/087898

(57) **Abstract**

The present disclosure provides a fuel assembly spacer grid (2c), a fuel assembly and a pressurized water reactor core. The fuel assembly spacer grid (2c) includes mixing vanes (4a). The mixing vanes (4a) are bent N times to form an "S" shape when viewed from the side, where N≥2. The mixing vanes (4a) are bent multiple times to laterally guide a fluid step by step. The fuel assembly includes a plurality of the fuel assembly spacer grids (2c) arranged along an axial direction of the fuel assembly. Cells of the spacer grids clamp fuel rods (2d), and the mixing vanes (4a) of different spacer grids (2c) continuously mix a coolant. For the pressurized water reactor core, one reactor core has the fuel assemblies with different enrichments, and during refueling, a plurality of the fuel assemblies are removed, and a plurality of new fuel assemblies are installed.

## Description

### TECHNICAL FIELD

The present disclosure belongs to the technical field of nuclear fuels, and particularly relates to a fuel assembly spacer grid, a fuel assembly and a pressurized water reactor core.

### BACKGROUND

A fuel assembly is the core component of a nuclear power plant, and its performance directly affects the reliability, safety and economy of the nuclear power plant. The purpose of high economy, safety and reliability of the fuel assembly is usually achieved by improving thermal hydraulic performance, fuel assembly burnup and flexural resistance and taking other measures for avoiding fuel damage in operation.

The structure of the existing pressurized water reactor fuel assembly usually includes the following two parts:
a) a skeleton structure, including a top nozzle, a bottom nozzle, guide tubes, an instrumentation tube and spacer grids distributed at different heights along the assembly; and
b) fuel rods containing fissile materials.

The spacer grids are generally assembled by straps, and have a plurality of square cavities. The guide tubes are placed in parallel in part of the spacer grid cavities, and the spacer grids successfully separate the guide tubes and control the spacing between the guide tubes, thereby forming a tube bundle. The upper and lower ends of the tube bundle are fixed by the top nozzle and the bottom nozzle, thereby forming the fuel assembly skeleton.

Fuel rods are placed in parallel in the cavities that are not occupied by the guide tubes. A cooling fluid flows from the lower part of the bottom nozzle through the fuel rods to moderate the neutrons and take away fission energy, and then flows out from the top nozzle, thereby realizing a cooling effect.

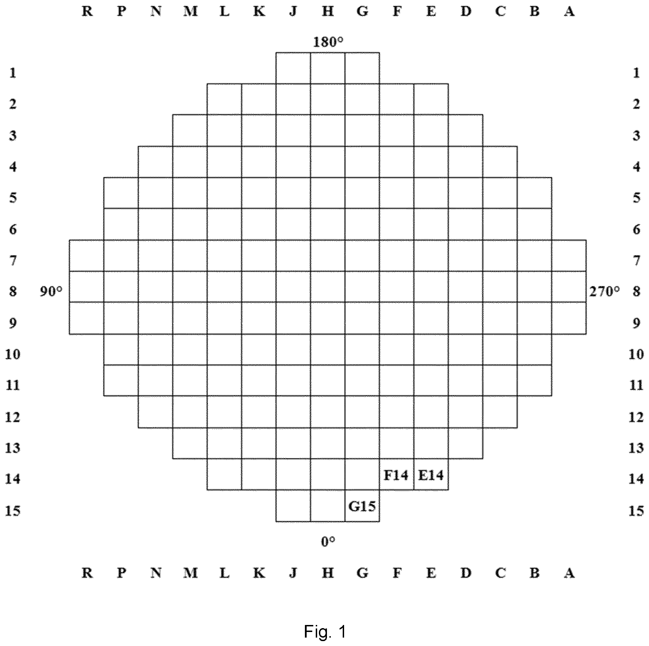

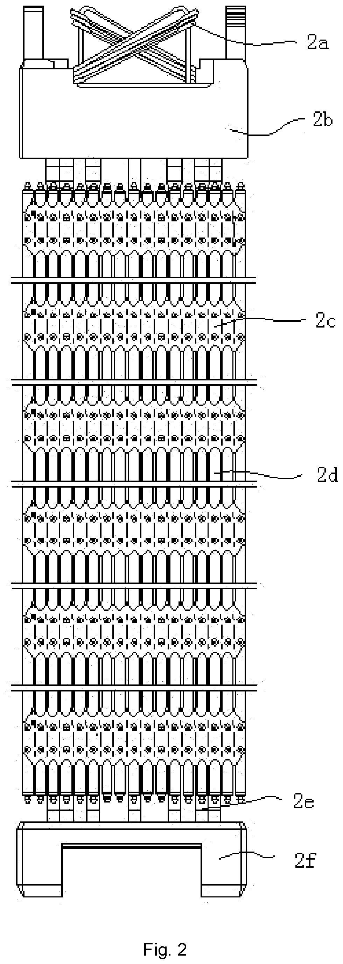

The fuel rods, the guide tubes and the instrumentation tube are arranged in a square or hexagonal grid. A reactor core is formed by arranging a plurality of fuel assemblies according to a lattice, so as to meet the requirements of reactor physics and thermal hydraulics. The schematic diagram of the reactor core is shown in FIG. 1, and the schematic diagram of the fuel assembly is shown in FIG. 2. The fuel assembly includes a top nozzle (containing a leaf spring compressing component), a bottom nozzle, a plurality of spacer grids, a plurality of fuel rods, a plurality of guide tubes, and the like. The fuel rods may be arranged in a particular form to form a quadrilateral (for example, arranged in N×N, where 2≤N≤25) or various other shapes such as a hexagon. A plurality of spacer grids are arranged along the axial direction, and the number of the spacer grids may be from 2 to 20.

The fuel rods run through the spacer grids and are clamped by the spacer grids, so as to keep the lateral spacing between the fuel rods and the axial spacing with the top and bottom nozzles.

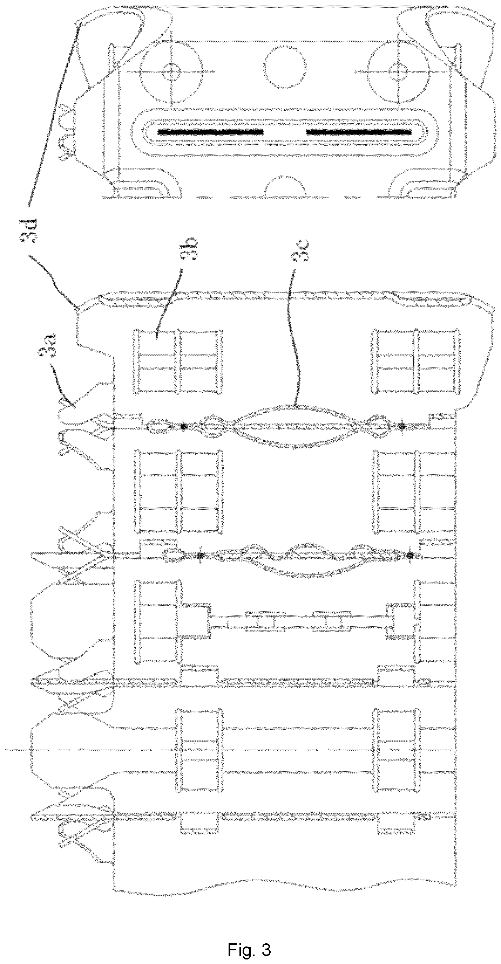

As an important component of the skeleton, the spacer grids are made of zirconium alloy straps that are embedded and welded with each other, and mainly function to clamp and position the fuel rods, and also to enhance mixing of the coolant by mixing vanes contained in the inner strap, so as to improve the critical heat flux density of the fuel assembly. As shown in FIG. 3, in a traditional spacer grid, an inner strap is provided with mixing vanes. First dimples are stamped on the inner strap, and springs are clamped at the middle of the inner strap. An outer strap is provided with guide vanes. The top end of the traditional spacer grid is provided with the mixing vanes, which are arranged alternately at the intersections of the straps. Corresponding to each subchannel, vortex mixing of the fluid inside the subchannel and lateral flow mixing between subchannels will be formed. The outer strap of the spacer grid on each layer is provided with the guide vanes, which not only function to mix the fluid, but also play a guide role during installation and removal of the fuel assembly.

To meet the requirement for high economy of an advanced nuclear power unit, the fuel assembly spacer grids are required to have good thermal hydraulic performance, which puts forward the requirements for the arrangement of the mixing vanes, the guide vanes and related components in the spacer grids on how to better guide the flow and reduce the flow resistance on the basis of reducing the degree of turbulence and ensuring the flow consistency. The prior art generally solves the above problem by improving the structural forms and connection relationships of the mixing vanes, the guide vanes and the related components.

Generally, to solve the above problem, in the prior art, mixing members are usually arranged at corners of the cavity provided with the fuel rod to enhance the cooling effect of the cooling fluid on the fuel rod. In US Patent US6144716, mixing members are inserted at corners of the cavity by means of slots, and a plurality of slotted holes are provided to increase the path of the cooling fluid. Moreover, the area and angle of mixing vanes are adjusted to improve the heat exchange effect. However, in the technical solution represented by this method, it is difficult to introduce the cooling fluid in the adjacent cavities for mixing, which causes insufficient heat exchange; the presence of ineffective vortex in single channels affects the flow and heat exchange of the cooling fluid; and when the cooling fluid flows through the mixing members, there is a large pressure drop.

Based on the above, the existing mixing vane structure does not consider how to give full play to its mixing effect on the fluid, the impact of the spring and dimples at the lower part on the mixing vane's effect of guiding the fluid, and the synergistic effect of the guide vanes and the mixing vanes of the outer strap of the spacer grid on fluid mixing, which leads to unsatisfactory mixing performance, thereby influencing the thermal performance of the nuclear fuel assembly and making the economy of the reactor unit of the nuclear power plant unable to be further improved.

### SUMMARY

To solve the problem of unsatisfactory mixing performance in the existing spacer grid mixing vane structure, the present disclosure provides a fuel assembly spacer grid.

The present disclosure is implemented by the following technical solution:
A fuel assembly spacer grid, arranged in an axial direction of a fuel assembly, includes inner straps and outer straps. The inner straps and the outer straps are orthogonally inserted into each other and are fixed at intersections by welding to form a plurality of fuel rod cells. The inner straps are located inside the fuel rod cells, and the outer straps are located at peripheries of the fuel rod cells. First dimples, springs and mixing vanes are stamped on each inner strap. The springs are located at a middle of the inner strap. The first dimples are located on an upper part and a lower part of each inner strap. The mixing vanes are located on an upper end of the inner strap. Second dimples are stamped on each outer strap. The second dimples are located on an upper part and a lower part of the outer strap. Upper and lower ends of each outer strap are respectively provided with guide vanes bent inward, and the guide vanes and the outer strap form an integral structure. Each mixing vane of the inner strap is bent N times to form an "S" shape when viewed from the side, where N≥2. An included angle between each bend and an axial direction of the fuel assembly spacer grid is 20° to 40°. The first bend is along a first horizontal baseline where a root of the mixing vane contacts an upper edge of the inner strap or along a first oblique baseline that forms an included angle of 10 to 20° with the first horizontal baseline. The second bend is along a second horizontal baseline or along a second oblique baseline that forms an included angle of 10 to 20° with the second horizontal baseline. A spacing between the second horizontal baseline and the first horizontal baseline is 2 to 5 mm. A spacing between the second oblique baseline and the first oblique baseline is 2 to 5 mm. A distance between a horizontal baseline of the N^{th} bend and a horizontal baseline of the (N-1)^{th} bend is 2 to 5 mm. A distance between an oblique baseline of the N^{th} bend and an oblique baseline of the (N-1)^{th} bend is 2 to 5 mm. An angle of the N^{th} bend is smaller than an angle of the (N-1)^{th} bend. All the bends are smooth transitions. The present disclosure adopts the mixing vanes with a special structure, and the mixing vanes are bent multiple times to laterally guide the fluid step by step, thereby improving the mixing performance of the spacer grid.

Upper and lower edges of the first dimple located on the upper part of the inner strap and upper and lower edges of the first dimple located on the lower part of the inner strap are respectively provided with stamped grooves, the stamped grooves are stamped in the inner strap, and a distance between a horizontal line of an upper edge of the inner strap and an upper edge of the stamped groove nearest thereto is greater than an axial height of the first dimple. The axial height of the first dimple refers to an axial length of the first dimple along the fuel rod cell. In the prior art, the distance between the mixing vanes and the lower dimple and the distance between the mixing vanes and the springs are respectively smaller than the height of the dimples, which is not conducive to the development of the fluid. In the present disclosure, by increasing the distance between the mixing vanes and the springs and the distance between the mixing vanes and the dimples, the degree of turbulence of the fluid when reaching the mixing vanes can be reduced, so that the guide effect of the mixing vanes on the fluid can be fully played, thereby improving the mixing performance.

The mixing vanes work synergistically with the guide vanes. When a coolant flows through the mixing vanes from bottom to top in the fuel assembly, a direction of the coolant is changed to produce a first lateral flow. When the coolant flows through the guide vanes from bottom to top in the fuel assembly, the direction of the coolant is changed to produce a second lateral flow. When projection vectors of the first lateral flow and the second lateral flow in a lateral flow direction of the coolant are in opposite directions, the mixing vanes and the guide vanes are in conflicting directions. When the projection vectors of the first lateral flow and the second lateral flow in the lateral flow direction of the coolant are in a same direction, the mixing vanes and the guide vanes are in matched directions. When the mixing vanes and the guide vanes are in matched directions, the guide vanes have a height of H1. When the mixing vanes and the guide vanes are in conflicting directions, the guide vanes have a height of H2. H2<H1. A size of H1 is 6 mm to 10 mm. A size of H2 is 2 mm to 6 mm. The height of the guide vane is a projection distance between a vertex of the guide vane and a horizontal baseline where a start point of the bend of the guide vane contacts the outer strap along a vertical direction.

In the present disclosure, according to the direction along which the mixing vanes at the periphery of the spacer grid guide the fluid, the height of the guide vanes on the upper part of the outer strap is designed synergistically to fully match the guide effects of the mixing vanes and the guide vanes on the fluid, thereby improving the mixing performance of the spacer grid. By designing the mixing vanes on the upper part of the spacer grid, the spring and the dimples inside the spacer grid and the guide vanes outside the spacer grid, the mixing performance of the spacer grid is enhanced.

The springs are stamped on a wall surface of the inner strap. Two ends of each spring are connected with the inner strap, and a middle part of the spring protrudes from a surface of the inner strap to form an arch structure configured to clamp the fuel rod. The springs are arranged along an axial direction of the fuel rod cell. Each arch structure is provided with a contact region at a position in contact with the fuel rod, and the contact region has a total length of 4 mm to 12 mm. Upper and lower ends of the spring on the inner strap are respectively provided with hole structures having a hole in a shape of one of a circle, an ellipse, an isosceles triangle and a rectangle. Three vertices of the isosceles triangle are all chamfered. Four vertices of the rectangle are all chamfered. A sum of surface areas of the upper and lower holes is not greater than 50% of an area of the spring.

According to material types, the existing fuel assembly spacer grids are divided into bimetallic spacer grids such as French AFA series assemblies, and monometallic spacer grids such as Westinghouse AP1000 fuel assemblies. In the bimetallic spacer grids, the straps are made of a zirconium alloy, and the springs are made of a nickel-base alloy. The nickel-base alloy has the advantage of high strength, but has the disadvantage of large neutron-absorption cross section, which is not conducive to the neutron economy of the fuel assemblies. The use of the monometallic spacer grids is conducive to the neutron economy of the reactor core, and is one of the development trends of the spacer grids. In the Westinghouse AP1000 assembly, the spring of the spacer grid is stamped on the wall surface of the strap of the cell, and the spring has a structure similar to the oblique dimple. This structure implements the application of monometallic springs, but has the disadvantage that the fuel rod may still contact the edges of the spring, which is not conducive to the protection of the rod surface during the process of pulling the rod. In addition, the spring of this structure has a relatively large stiffness, so that the compression stroke of the spring is short, making it sensitive to the manufacturing tolerance. In the present disclosure, the spring is arranged longitudinally along the cell of the spacer grid, the spring is directly stamped on the wall surface of the strap, and the whole spacer grid is made of a monometallic material, which is conducive to the neutron economy. The spring is in a continuous arc structure, which reduces scratches on the surface of the cladding during the process of pulling the rod. Moreover, the streamlined structure is beneficial to reduce the flow resistance of the coolant. In addition, the stiffness of the formed spring structure is easily adjustable, which can reduce the sensitivity to the manufacturing tolerance.

Preferably, in the present disclosure, the contact region is a flat surface or an arc surface wrapping the fuel rod.

Preferably, in the present disclosure, upper and lower ends of each spring on the inner strap are respectively provided with hole structures having a hole in a shape of one of a circle, an ellipse, an isosceles triangle and a rectangle. Three vertices of the isosceles triangle are all chamfered. Four vertices of the rectangle are all chamfered. A sum of surface areas of the upper and lower holes is not greater than 50% of an area of the spring.

Preferably, in the present disclosure, widths of the upper and lower ends of the spring are respectively greater than a width of a middle region of the spring, and a minimum width of the middle region of the spring is respectively not smaller than 1/3 of the widths of the upper and lower ends; or
the widths of the upper and lower ends of the spring are respectively smaller than the width of the middle region of the spring; or
the widths of the upper and lower ends of the spring are respectively equal to the width of the middle region of the spring.

Upper and lower ends of the inner strap are provided with trapezoidal guide vane support structures at positions in contact with the guide vanes, the guide vane support structures and the inner strap form an integral structure, and the guide vanes each abut against the corresponding guide vane support structure. A top end of the guide vane support structure and an inner side of the corresponding guide vane are fixed into an integral structure through welding.

When the existing fuel assemblies are in use, the spacer grids may be hooked with each other, causing damage to the fuel assemblies. In the present disclosure, the guide vane support structure and the guide vane form an integral structure, which avoids damage of the fuel assemblies caused by hooking during installation and removal and improves the anti-hooking performance of the fuel assemblies.

In another aspect, the present disclosure further provides a fuel assembly, which includes a plurality of guide tubes, an instrumentation tube and fuel assembly spacer grids described in the present disclosure arranged along an axial direction of the fuel assembly. Cells of the fuel assembly spacer grids clamp fuel rods, and mixing vanes of different spacer grids continuously mix a coolant to enhance heat transfer capacity of the coolant. The guide tubes and the instrumentation tube are uniformly distributed in the cells. A reactor core measuring instrument is inserted into the instrumentation tube. A top nozzle is located at a top end of the fuel assembly. A bottom nozzle is located at a bottom of the fuel assembly.

Preferably, according to the fuel assembly of the present disclosure, fuel rod claddings, the guide tubes and the instrumentation tube are all made of a fully recrystallized zirconium-tin-niobium alloy.

In the present disclosure, by using the high-performance zirconium alloy as the fuel cladding, the corrosion resistance, irradiation creep resistance and irradiation growth resistance of the fuel cladding are improved, and the fuel rod can realize high burnup. The guide tubes of the present disclosure are made of the zirconium alloy with good irradiation growth resistance, which reduces the difference in radiation growth between different guide tubes and can reduce the flexural deformation of the fuel assembly under high burnup.

Preferably, in the present disclosure, the fully recrystallized zirconium-tin-niobium alloy includes: 0.80% to 1.20% of tin, 0.90% to 1.25% of niobium, 0.12% to 0.45% of iron, 0.06% to 0.15% of oxygen, less than 0.015% of carbon, less than 0.008% of nitrogen and the balance of zirconium in mass percentages.

The bottom nozzle is configured to ensure the flow distribution of the coolant in the fuel assembly, bear the vertical load applied to the fuel assembly support structure through the guide tubes and prevent foreign matters from entering the fuel assembly. The bottom nozzle is made of stainless steel. The bottom nozzle of the existing fuel assembly usually uses an anti-foreign matter plate with close-packed holes to filter out foreign matters, which has the following disadvantages: the fuel assembly can filter out foreign matters with a particular size, but cannot efficiently filter out foreign matters with a smaller size, so that the filter efficiency is relatively low; and due to the small size of the close-packed holes, when the fluid passes through the close-packed holes, sudden contraction and sudden expansion may lead to a large flow resistance. The bottom nozzle provided in the present disclosure has a comprehensive filter efficiency of up to 87%, which is higher than the filter efficiency (78%) of the existing bottom nozzle in China.

Preferably, according to the fuel assembly of the present disclosure, the bottom nozzle has a function of filtering out foreign matters. The bottom nozzle includes a plurality of blades with axes parallel with each other and a plurality of rib assemblies with axes parallel with each other. The plurality of rib assemblies and blades are staggered to form a lattice structure, and the axes of the rib assemblies are perpendicular to the axes of the blades. In the present disclosure, by using the anti-foreign matter device of the bottom nozzle, the ability of preventing foreign matters from causing damage is improved.

Preferably, in the present disclosure, the blades of the bottom nozzle include a plurality of protruding members with a same protruding direction, and every two adjacent protruding members are connected by a straight section. An upper end surface and a lower end surface of the straight section are respectively provided with recesses, and an opening direction of each recess is perpendicular to the protruding direction of the protruding members. The rib assembly includes an upper rib and a lower rib that are symmetrical, and opposite surfaces of the upper rib and the lower rib are each provided with clamping grooves corresponding to the blades in quantity. The upper rib is located above the blade, and the clamping grooves of the upper rib are clamped with the recesses in the upper end surface of the blade in an occlusal manner. The lower rib is located below the blade, and the clamping grooves of the lower rib are clamped with the recesses in the lower end surface of the blade in an occlusal manner.

As a key component of the fuel assembly, the top nozzle functions to laterally position the fuel assembly, bear and transfer compression force, provide an outlet cavity for the coolant, provide an interface for the lifting of the fuel assembly and prevent the fuel rod from being ejected. The top nozzle of the existing fuel assembly mainly includes a connecting plate, enclosure plates and frame plates. The existing top nozzle has the following problems: 1) Water flow holes are not arranged properly, so that there is a small quantity of the water flow holes, which directly leads to a low proportion of flow area on the connecting plate and a large pressure drop between upper and lower sides of the connecting plate. In this case, more head of the main pump needs to be consumed to make the fluidity of cooling water satisfactory, causing poor economy. 2) An asymmetrical arrangement of the water flow holes has an adverse effect on the flow field distribution at the outlet of the fuel assembly. When the cooling water is redistributed after passing through the top nozzle, lateral flows may be produced easily, which increases the risk of failure caused by vibrational abrasion of a control rod and a burnable poison rod.

According to the present disclosure, the top nozzle includes a connecting plate, enclosure plates fixed to edges of the connecting plate and frame plates fixed to the enclosure plates. The connecting plate is provided with connecting holes A for mounting the guide tubes of the fuel assembly and a connecting hole B for mounting the instrumentation tube. A plurality of elongated water flow holes are uniformly formed in the connecting plate. The water flow holes include water flow holes A and water flow holes B, and an included angle of greater than 0° is formed between axes of the water flow hole A and the water flow hole B. On the connecting plate, a connecting portion is formed among two water flow holes A and two water flow holes B that are adjacent along an axial direction. On the connecting plate, an enclosing portion is formed among two water flow holes A and two water flow holes B that are adjacent along a radial direction. The connecting plate is further provided with central water flow holes, and the connecting holes A, the connecting holes B and the central water flow holes are respectively arranged in the enclosing portions. A side surface of the water flow hole is recessed to form an arc surface A, and a radian of the arc surface A is matched with a radian of the adjacent connecting hole A, connecting hole B or central water flow hole. The connecting holes A and the central water flow holes are staggered, and the connecting holes B are formed in the enclosing portions at a center of the connecting plate.

Preferably, in the present disclosure, two types of fuel rods are provided. The first type of fuel rods adopt UO₂ fuel pellets, and the second type of fuel rods adopt UO₂-Gd₂O₃ burnable poison fuel pellets. A mass percentage of Gd₂O₃ in the UO₂-Gd₂O₃ burnable poison fuel pellets is 2% to 12%. The UO₂ fuel pellets have a grain size of 25 to 60 µm.

Preferably, in the present disclosure, the fuel pellet in the fuel rod is compressed by a spring, the fuel rod is filled with helium, and the spring is a variable pitch spring. A pitch from a left end of the spring and a right end of the spring to a midpoint of the spring increases, the pitch of the spring varies from 5 mm to 12 mm, the pitch keeps constant after reaching the maximum pitch, and 5 to 8 coils with a variable pitch are respectively provided between the left end of the spring and the midpoint of the spring and between the right end of the spring and the midpoint of the spring.

Preferably, the fuel assembly contains the guide tubes for accommodating insertion of nuclear reactor control rods. An inner side of a lower part of each guide tube is provided with an inner sleeve, and the guide tube and the inner sleeve are connected through expansion or welding to form a control rod cushion section. In the present disclosure, through the structural design of the tube-in-tube guide tube, the cushion section for the falling control rod is formed, which is simple in manufacturing process and has the ability of cushioning the falling control rod.

Preferably, the reactor core measuring instrument is inserted from an upper part of the instrumentation tube or from a lower part of the instrumentation tube.

In addition, the present disclosure further provides a pressurized water reactor core, which uses a plurality of fuel assemblies of the present disclosure. One reactor core has the fuel assemblies with different enrichments, and during refueling, a plurality of the fuel assemblies are removed, and a plurality of new fuel assemblies are installed.

The present disclosure has the following advantages and beneficial effects:
1. In the present disclosure, each mixing vane is bent multiple times. The root is bent at a small angle to guide the axial fluid for the first time, and the middle of the mixing vane is bent multiple times to further laterally guide the fluid, so that the mixing effect of the coolant is improved by 25% or above. Moreover, due to the small angle of bending at the root, the overall resistance of the spacer grid is reduced by 5% or above.
2. In the present disclosure, the mixing vanes are located on the top of the spacer grid, and the clamping structures such as the springs and the dimples are arranged therebelow. When the fluid flows through the spring and the dimples, disturbance is produced due to the change of the flow channel. By increasing the distance between the mixing vanes and the springs and the distance between the mixing vanes and the dimples, the degree of turbulence of the fluid when reaching the mixing vanes can be reduced, so that the guide effect of the mixing vanes on the fluid can be fully played, thereby improving the mixing performance.
3. In the present disclosure, each outer strap is provided with the guide vanes which mainly function to prevent hooking. The guide vanes are bent to the inner side of the spacer grid, and particularly, the guide vanes on the upper part will affect the mixing of side cells of the spacer grid. According to the direction along which the nearby mixing vanes guide the fluid, the height of the guide vanes is designed synergistically. In the case that the lateral flow guided by the bending direction of the guide vanes can be matched with the nearby mixing vanes, the height of the guide vanes is increased to fully play the mixing effect. In the case that the lateral flow guided by the bending direction of the guide vanes conflicts with the nearby mixing vanes, the height of the guide vanes is decreased while ensuring the anti-hooking function, thereby reducing the adverse effect.
4. The springs are arranged along the axial direction of the cell, and the cross section through which the coolant flows changes continuously, so that there are few structural abrupt changes, which is beneficial to reduce the flow resistance. The side surfaces of the springs are arc-shaped, and opening structures are provided near two ends of the springs, which increases the flow area of the coolant and reduces the flow resistance. The springs designed according to the present disclosure reduce the resistance coefficient of the spacer grid from 1.18 to 1.08, so that the resistance is reduced by 8.5%.
5. In the present disclosure, the ends of the inner straps of the spacer grid are provided with the support structures, which improves the flexural resistance of the guide vanes. Moreover, the guide vanes are fixed with the support structures at the ends of the inner straps, which improves the flexural deformation resistance of the guide vanes and further prevents the guide vanes from damage. The guide vanes are fitted with the inner straps in combination with the support structures, the anti-hooking ability is significantly improved as compared with the existing spacer grid. The existing spacer grids may be hooked with each other when the lateral compression force is 100 N. With the guide vanes provided by the present disclosure, no hooking occurs even when the lateral compression force reaches 500 N, so that the performance is improved.
6. In the present disclosure, the springs are arranged along the axial direction of the cell, so that the surface of the fuel rod is continuously guided during the process of pulling the rod, which can reduce scratches on the surface of the cladding. The springs have an arch structure, so that after the springs are compressed, the stress is transferred to the base of the strap, which avoids concentrated high-stress regions in the springs. The wider roots reduce the stress level, and the stress level of the roots can be reduced by 25% under the same load. On the whole, the probability of damage to the fuel rod by the springs is reduced, and the reliability of the structure is improved.
8. The variable pitch spring is adopted in the present disclosure. By increasing the pitch, the coil count of the spring can be reduced while keeping the same stiffness, so that the volume of the spring is reduced, a larger volume of the air cavity can be obtained, and thus, more fission gas can be stored. Compared with the design of a standard pitch spring, the volume of the air cavity is increased by 5%.
8. The large-grain fuel pellets adopted in the present disclosure have stronger fission gas release ability. Moreover, during the interaction between the pellet and the cladding, due to the lower hardness, the interaction between the pellet and the cladding can be reduced, which is beneficial to improve the safety of fuel elements.
9. In the present disclosure, the cladding, which is made of the fully recrystallized zirconium-tin-niobium alloy, has good corrosion resistance, creep resistance and irradiation growth resistance under the condition of high burnup of the fuel rod, and meets the operating requirement for the refueling time of 18 months for the nuclear power plant. Since the cladding has higher corrosion resistance, the thickness of corrosion products is small under high burnup, and the corrosion products will not peel off, thereby ensuring the completeness of the fuel rod. Compared with other common zirconium alloy cladding fuel rods, the irradiation growth of the fuel rod using this alloy cladding is reduced by 10% or above at the end of irradiation life. Due to the small irradiation growth of the cladding, under the high burnup of the fuel rod, there is still a large gap left between the fuel rod and the fuel assembly, so that there will be no rigid squeezing between the rod and the assembly produced by irradiation growth, causing flexural failure of the fuel rod. Moreover, due to the small irradiation growth of the cladding, there is a small difference in radiation growth between different fuel rods under high burnup, so that the flexural resistance of the whole fuel assembly is improved. By using the fuel rod cladding made of the zirconium alloy, the maximum burnup of the fuel assembly can be increased by 10%. The fully recrystallized zirconium-tin-niobium alloy adopted by the present disclosure has accumulated the in-reactor irradiation experience of more than 6000 fuel rods, and the irradiation burnup has reached 58000 MWd/tU. The operation experience and the results of pool side inspection indicate that the alloy has good corrosion resistance, irradiation growth resistance and mechanical properties.
9. In the anti-foreign matter bottom nozzle of the present disclosure, the characteristics of closed flow channels, bent flow channels formed by the protrusion of the blades, and the close-packed structure improve the filtration capacity of the bottom nozzle. By reasonably setting the size of the flow channels, the size of the foreign matters that can pass through is much smaller than the gap between the spacer grid and the fuel rod, so that the foreign matters passing through the bottom nozzle will not stay between the spacer grid and the fuel rod, thereby avoiding damage to the fuel assembly caused by the foreign matters.
10. According to the present disclosure, in the guide tube, the cushion section is formed through expansion or welding, which is simple in structure, saves the structural material, improves the neutron economy of the fuel assembly, lowers the requirements of the manufacturing process and improves the manufacturing economy of the fuel assembly. The guide tube has a good ability of cushioning the falling control rod.
11. In the present disclosure, since the fully recrystallized zirconium-tin-niobium alloy is used as the material of the guide tube, the irradiation growth of the guide tube is small, and the fuel assembly can bear high burnup without rigidly contacting components in the reactor. There is a small difference in radiation growth between different guide tubes under high burnup, so that the flexural resistance of the whole fuel assembly is improved.
12. According to the top nozzle provided by the present disclosure, by changing the shapes and arrangement of the water flow holes, the water flow holes can be arranged uniformly, and the proportion of flow area is increased, which solves the technical problems of poor economy of the top nozzle and adverse effect on the flow field distribution at the outlet of the fuel assembly.

### BRIEF DESCRIPTION OF THE DRAWINGS

FIG. 1 is a schematic structural view of a reactor core.
FIG. 2 is a schematic structural view of a fuel assembly.
FIG. 3 is a schematic structural view of a traditional fuel assembly spacer grid.
FIG. 4 is a schematic view showing bending of a mixing vane.
FIG. 5 is a schematic structural view of mixing vanes, springs and dimples on an inner strap according to a first example of the present disclosure.
FIG. 6 is a side view of FIG. 5.
FIG. 7 shows schematic structural views of mixing vanes, springs and dimples on inner straps according to the present disclosure, where A represents a second example, B represents a third example, and C represents a fourth example.
FIG. 8 is a schematic diagram showing a synergistic relationship between guide vanes and mixing vanes according to the present disclosure.
FIG. 9 is a schematic local structural view of an outer strap.
FIG. 10 is a side view of FIG. 8.
FIG. 11 is a schematic view of a bottom nozzle according to the present disclosure.
FIG. 12 is a schematic view showing fitting of blades and rib assemblies at the bottom nozzle according to the present disclosure.
FIG. 13 is a schematic local structural view of blades according to the present disclosure.
FIG. 14 is a sectional view of a guide tube according to the present disclosure.
FIG. 15 is a schematic sectional structural view of a top nozzle.
FIG. 16 is a top view of the top nozzle.

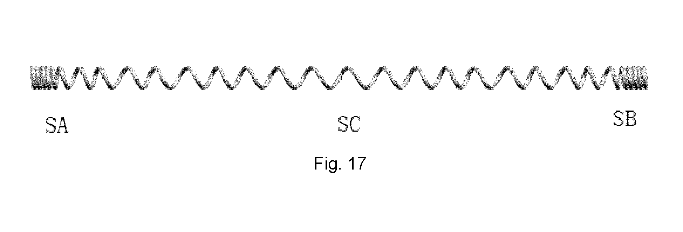

FIG. 17 is a schematic view of a spring structure.

### Reference signs and corresponding part names in the accompanying drawings:

2a: leaf spring compressing component; 2b: top nozzle; 2c: spacer grid; 2d: fuel rod; 2e: guide tube; 2f: bottom nozzle; 3a: traditional mixing vane; 3b: traditional dimple; 3c: traditional spring; 3d: traditional guide vane; 4a: mixing vane; 4b: first dimple; 4c: spring; 4d: hole structure; 4e: arc structure; 4f: convex arc; 4g: straight edge; 4h: contact region; 5a: guide vane; 6a: inner strap; 6b: guide vane support structure; 6c: outer strap; 6e: second dimple; 6d: stamped groove; 7a: coolant flow channel; 7b: upper rib; 7c: enclosure plate; 7d: leg; 7e: connecting hole; 8a: blade; 8b: upper rib; 8c: lower rib; 8d: enclosure plate; 8e: leg; 9a: protruding member; 9b: recess; 9c: straight section; 10a: guide tube; 10b: inner sleeve assembly; 10c: guide tube end plug; D2: angle of N^{th} bend; D1: angle of (N-1)^{th} bend; H3: distance between horizontal line of upper edge of inner strap and upper edge of stamped groove nearest thereto; H4: axial height of first dimple; A1: first horizontal baseline; A2: first oblique baseline; B1: second horizontal baseline; B2: second oblique baseline; T: lateral flow direction of coolant; R1: first lateral flow; R2: second lateral flow; SA: left end of spring; SB: right end of spring; SC: center of spring; 2: connecting plate; 3: enclosure plate; 4: frame plate; 5: connecting hole A; 6: connecting hole B; 10: lifting surface; 201: water flow hole A; 202: water flow hole B; 203: connecting portion; 204: enclosing portion; 205: central water flow hole; 206: arc surface A; SA: left end of spring structure; SB: right end of spring structure; and SC: center of spring structure.

### DETAILED DESCRIPTION

Hereinafter, the term "include" or "may include" that may be used in the examples of the present disclosure indicates the presence of the invented function, operation or element, and does not limit the addition of one or more functions, operations or elements. In addition, as used in the examples of the present disclosure, the terms "include", "have" and cognates thereof are merely intended to indicate a specific feature, number, step, operation, element, assembly or a combination of the foregoing items, and should not be understood as first excluding the presence of one or more other features, numbers, steps, operations, elements, assemblies or combinations of the foregoing items, or the possibility of adding one or more features, numbers, steps, operations, elements, assemblies or combinations of the foregoing items.

In the examples of the present disclosure, the expression "or" or "at least one of A or/and B" includes any combination or all combinations of words listed simultaneously. For example, the expression "A or B" or "at least one of A or/and B" may include A, or include B, or include both A and B.

Expressions (such as "first" and "second") used in the examples of the present disclosure may modify various constituent elements in the examples, but the corresponding constituent elements may not be limited. For example, the above expressions do not limit the order and/or importance of the described elements. The above expressions are used only for the purpose of distinguishing one element from other elements. For example, a first user device and a second user device indicate different user devices, although both are user devices. For example, without departing from the scope of the examples of the present disclosure, a first element may be referred to as a second element, and similarly, a second element may also be referred to as a first element.

It should be noted that if it is described that one constituent element is "connected" to another constituent element, a first constituent element may be directly connected to a second constituent element, and a third constituent element may be "connected" between the first constituent element and the second constituent element. On the contrary, when one constituent element is "directly connected" to another constituent element, it can be understood that there is no third constituent element between the first constituent element and the second constituent element.

The terms used in the examples of the present disclosure are used only for the purpose of describing specific examples and are not intended to limit the examples of the present disclosure. As used herein, the singular form is intended to include the plural form as well, unless the context clearly indicates otherwise. Unless otherwise defined, all terms (including technical terms and scientific terms) used herein have the same meaning as commonly understood by those of ordinary skill in the art to which the examples of the present disclosure belong. The terms (such as those defined in dictionaries of general use) will be interpreted as having the same meaning as the contextual meaning in the related art and will not be interpreted as having an idealized meaning or an overly formal meaning unless clearly defined in the examples of the present disclosure.

To make the objectives, technical solutions and advantages of the present disclosure more clear, the present disclosure will be further described in detail below with reference to specific examples and accompanying drawings. The exemplary embodiments of the present disclosure and descriptions thereof are merely used for explaining the present disclosure, and are not intended to limit the present disclosure.

As shown in FIG. 1, in the structure of an existing reactor core, 0°, 90°, 180° and 270° represent orientations of the reactor core. The letters on the abscissa and the numbers on the ordinate are used to indicate the coordinates in the reactor core, and one pair of abscissa and ordinate represents one position at which one fuel assembly is installed. For example, G15, F14 and E14 are positions of 3 fuel assemblies.

### Example 1

This example provides a fuel assembly spacer grid. The fuel assembly spacer grid is formed by assembling and welding inner straps and outer straps. Each inner strap includes mixing vanes, first dimples, stamped grooves, springs and guide vane support structures. Each outer strap includes guide vanes and second dimples.

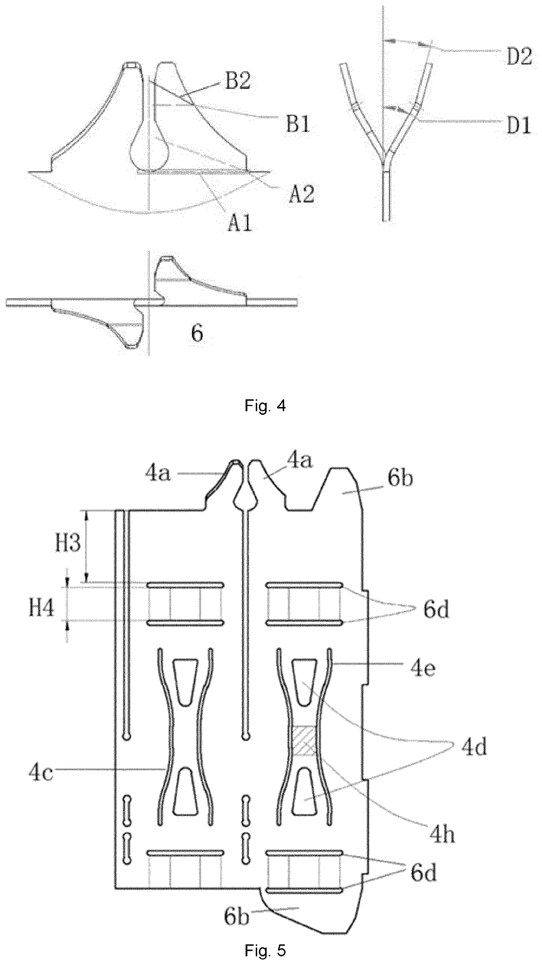

This example provides a structure of mixing vanes, springs and dimples of the fuel assembly spacer grid. Specifically, as shown in FIG. 4 to FIG. 5, this example adopts a spacer grid with efficient mixing performance. The mixing vane of the spacer grid is bent N times to form an "S" shape when viewed from the side.

A distance H3 between a horizontal line of an upper edge of the inner strap and an upper edge of the stamped groove nearest thereto is greater than an axial height H4 of the first dimple. H4 refers to an axial length of the first dimple along a fuel rod cell. In a monometallic spacer grid, the spring and the first dimple included in one cell in opposite directions form a pair of clamping structures. The springs are directly stamped on the strap of the cell to protrude from the surface of the strap and form an arch structure. The springs are arranged along an axial direction of the cell. The arch structure formed by stamping includes a single arch, or a combination of a plurality of arches according to needs. When the fuel rod is pulled to pass through the cells, the arches arranged along the axial direction can continuously guide the fuel rod, and there is no sharp surface or edge contacting a fuel rod cladding, which can reduce the damage to the cladding. The highest position of the arc contacts the fuel rod, and this contact position is provided with a contact region with a particular length, which is a flat surface or an arc part wrapping the fuel rod cladding, so as to reduce the stress of the contact position. Hole structures are provided near two ends of each spring to increase the flow area of the coolant, thereby reducing the flow resistance. The side surface of the spring has an arc structure. Widths of the two ends of the spring are respectively greater than a width of a middle region, which can reduce the stress of the root and also reduce the obstruction of the flow area while ensuring an appropriate contact area of the fuel rod, thereby reducing the flow resistance.

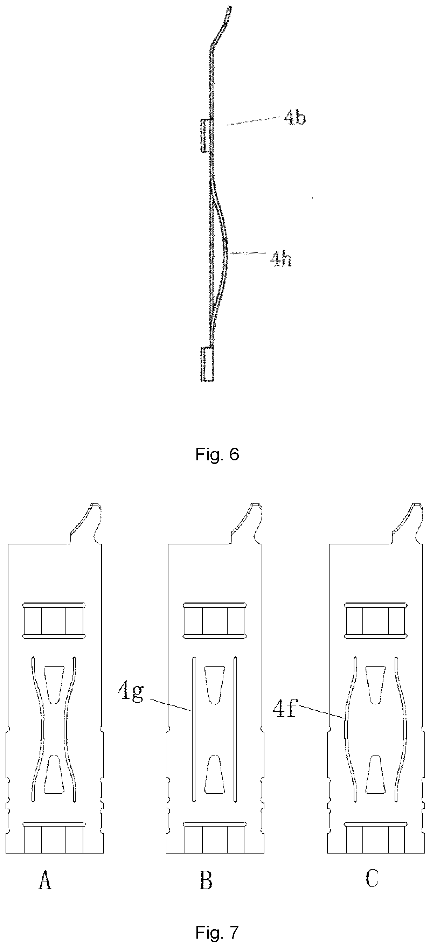

As shown in FIG. 7, in this example, when the guide vanes and the mixing vanes are in matched directions, the guide vanes have a height of H1. When the mixing vanes and the guide vanes are in conflicting directions, the guide vanes have a height of H2. H2<H1. A size range of H1 is 3 mm to 6 mm. A size range of H2 is 1 mm to 3 mm.

In this example, the mixing vanes are bent multiple times to form an "S" shape when viewed from the side, the distance between the mixing vanes and the springs at the lower part and the distance between the mixing vanes and the dimples are increased at the same time, and the synergistic effect between the guide vanes and the mixing vanes is utilized, so that the mixing performance of the spacer grid is improved.

### Example 2

As shown in FIG. 6, this example further optimizes the spring provided in Example 1. The profile of the spring in this example may be adjusted according to needs to a straight edge; or an oppositely convex arc, i.e., the width of the middle is greater than the width of the two ends, and the middle region of the spring in contact with the fuel rod is processed into an arc with a particular radius that wraps the fuel rod cladding.

### Example 3

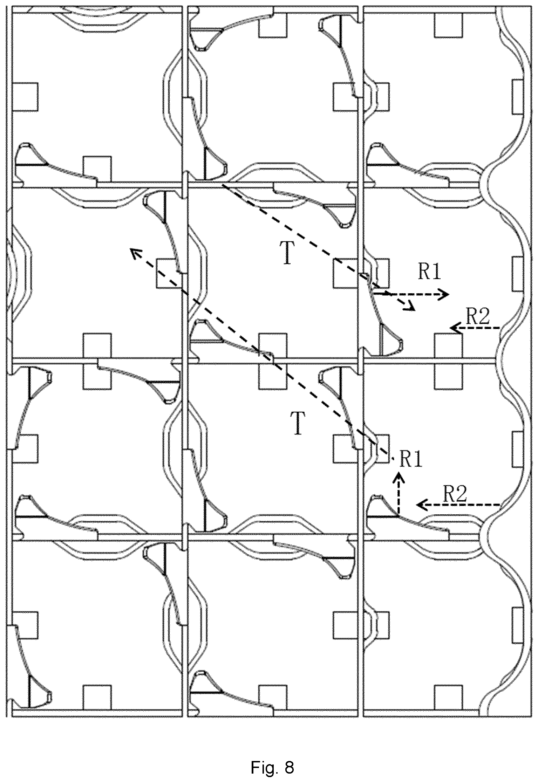

This example further optimizes the spacer grid provided in the above example. As shown in FIG. 7 to FIG. 9, the spacer grid includes a plurality of straps orthogonally inserted into each other, and upper and lower parts of intersections are fixed through welding to form square fuel rod cells. On the premise that the structural relationship can be clearly expressed, for the sake of simplicity, FIG. 7 to FIG. 9 show only local structures of the spacer grid. The straps located inside and at a periphery are respectively inner straps and outer straps. Upper and lower ends of each outer strap are respectively continuously provided with guide vanes bent inward. The guide vanes are arranged continuously to perform the continuous guide function, which prevents the assemblies from being hooked with each other during lifting.

To improve the flexural resistance of the guide vanes, two ends of each inner strap of the present disclosure are respectively provided with guide vane support structures corresponding to the guide vanes. Each guide vane support structure abuts against an inner side of the corresponding guide vane, and when they press against each other, the rigidity of the outer strap can be improved.

After the spacer grids are hooked with each other, the guide vane may become turned out or split. Therefore, to further avoid the damage to the guide vanes, the guide vane support structure and the inner side of the guide vane are welded together.

### Example 4

This example provides a fuel assembly, which includes a top nozzle, fuel rods, guide tubes, an instrumentation tube, a bottom nozzle and spacer grids provided in the above examples.

Fuel rod claddings, the guide tubes and the instrumentation tube are all made of a fully recrystallized zirconium-tin-niobium alloy. The fully recrystallized zirconium-tin-niobium alloy includes: 0.80% to 1.20% of tin, 0.90% to 1.25% of niobium, 0.12% to 0.45% of iron, 0.06% to 0.15% of oxygen, less than 0.015% of carbon, less than 0.008% of nitrogen and the balance of zirconium in mass percentages.

A reactor core measuring instrument is inserted from an upper part of the instrumentation tube or from a lower part of the instrumentation tube.

### Example 5

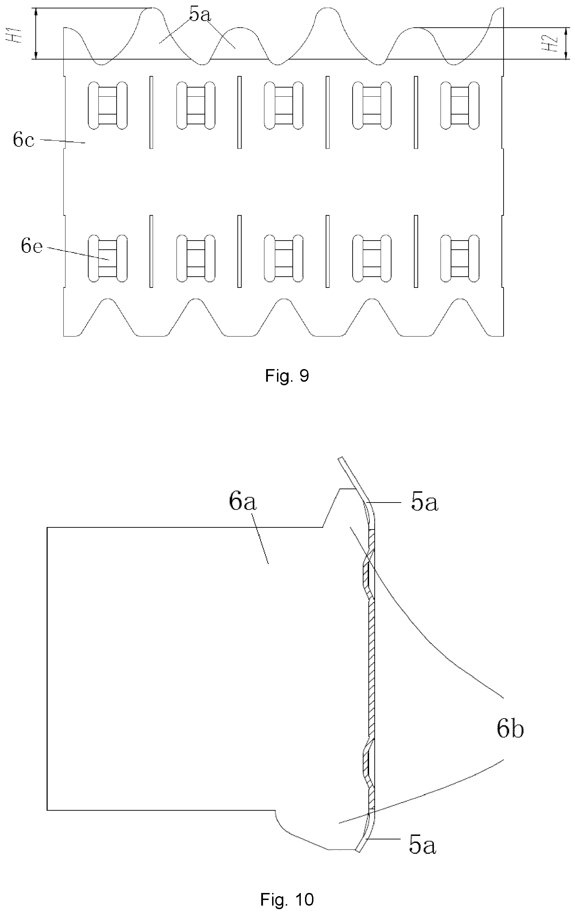

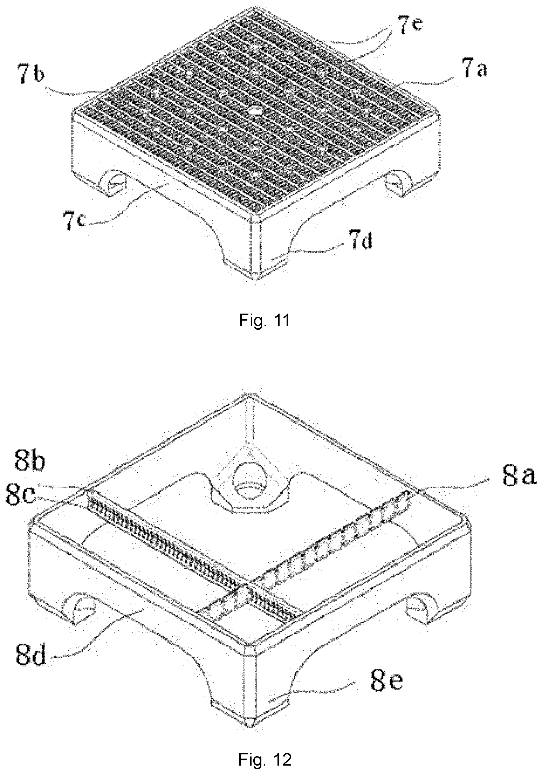

This example further optimizes the bottom nozzle in Example 4. As shown in FIG. 10 to FIG. 12, the bottom nozzle in this example has a function of filtering out foreign matters. The bottom nozzle includes a plurality of blades with axes parallel with each other and a plurality of rib assemblies with axes parallel with each other, and the axes of the rib assemblies are perpendicular to the axes of the blades. The rib assembly includes an upper rib and a lower rib that are symmetrical, and opposite surfaces of the upper rib and the lower rib are each provided with clamping grooves corresponding to the blades in quantity. The blades include a plurality of protruding members with a same protruding direction, and every two adjacent protruding members are connected by a straight section. An upper end surface and a lower end surface of the straight section are respectively provided with recesses, and an opening direction of each recess is perpendicular to the protruding direction of the protruding members. The upper rib is located above the blade, and the clamping grooves of the upper rib are clamped with the recesses in the upper end surface of the blade in an occlusal manner. The lower rib is located below the blade, and the clamping grooves of the lower rib are clamped with the recesses in the lower end surface of the blade in an occlusal manner.

In this example, by using the blades including the plurality of arc-shaped protruding members, the blades are regularly and symmetrically arranged together at certain intervals, and a flow channel for filtering out foreign matters is formed between two parallel protruding members on every two adjacent blades. The upper rib and the lower rib, which have the same structure and are symmetrically arranged, respectively clamp the blade from the upper and lower sides of the blade at the gap between the adjacent protruding members of the blades, so that the flow channel between the two adjacent blades is further divided into separate flow channels that are completely closed, which can enhance the filtration function and reduce the coolant pressure drop. To increase the structural strength, a supporting seat is embedded into the combination of the blades and the rib assemblies, thereby providing an installation structure for the guide tubes and the instrumentation tube of the fuel assembly. The above combination is fixed by a frame body, that is, two ends of the rib assembly and two ends of the blade are all embedded in the frame body, and the entire structure above is supported by legs. The entire structure above is completely combined into a whole, which is the bottom nozzle. The blades include the plurality of arc-shaped protruding members, and thus, have good stiffness and strength. The ribs run through the entire blade, which further increases the structural strength of the bottom nozzle. Moreover, compared with the open flow channel, the separate closed flow channels improve the filtration capacity of the bottom nozzle and reduce the coolant pressure drop. The geometric shapes of the blades and ribs are also in forms that are beneficial to reduce the coolant pressure drop. Based on the above, the bottom nozzle has excellent performance in the aspects of structural strength, filtration capacity and coolant pressure drop.

### Example 6

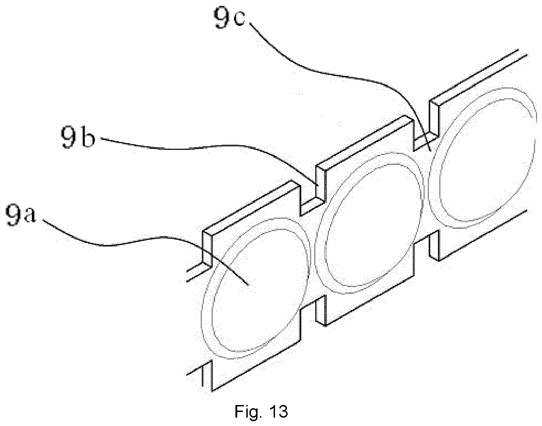

This example further optimizes the guide tube provided in the above example. This example adopts a tube-in-tube guide tube, as shown in FIG. 13, specifically including a guide tube, an inner sleeve assembly and a guide tube end plug. The tube-in-tube guide tube includes the guide tube, the guide tube end plug welded to an opening at a lower end of the guide tube, and the inner sleeve assembly fixed to an inner wall of the guide tube through expansion. In this example, the inner sleeve assembly is a single-layer inner sleeve, and the inner sleeve and the guide tube are straight tubes having a same wall thickness.

The number of the inner sleeve assemblies in this example may be selected according to the performance requirements of the fuel assembly. There may be 1 or more inner sleeve assemblies. The inner sleeve assembly is fixed to the inner wall of the guide tube at a position where cushioning is needed, so as to form a cushion section, which obtains a satisfactory cushioning effect for the fuel assembly, reduces the consumption of the structural material and improves the neutron economy of the fuel assembly.

### Example 7

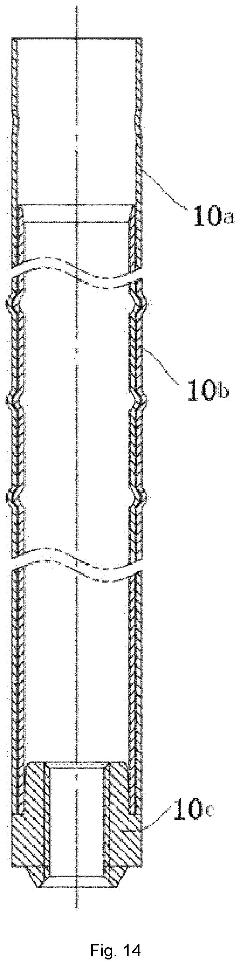

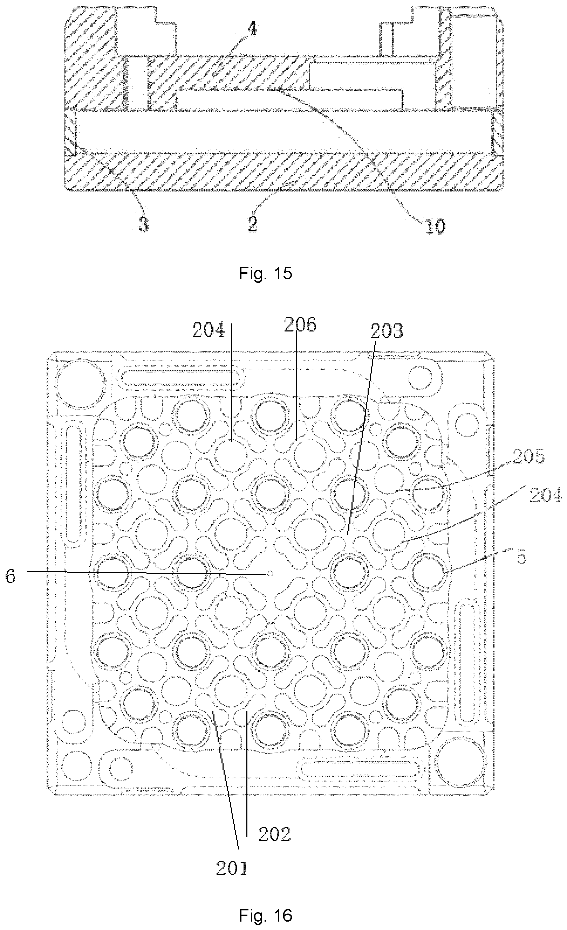

As shown in FIG. 14 to FIG. 15, this example further optimizes the top nozzle provided in the above example. The top nozzle includes a connecting plate, enclosure plates fixed to edges of the connecting plate and frame plates fixed to the enclosure plates. The connecting plate is provided with connecting holes A for mounting the guide tubes of the fuel assembly and a connecting hole B for mounting the instrumentation tube. A plurality of elongated water flow holes are uniformly formed in the connecting plate. The water flow holes include water flow holes A and water flow holes B, and an included angle of greater than 0° is formed between axes of the water flow hole A and the water flow hole B. On the connecting plate, a connecting portion is formed among two water flow holes A and two water flow holes B that are adjacent along an axial direction. On the connecting plate, an enclosing portion is formed among two water flow holes A and two water flow holes B that are adjacent along a radial direction. The connecting plate is further provided with central water flow holes, and the connecting holes A, the connecting holes B and the central water flow holes are respectively arranged in the enclosing portions. A side surface of the water flow hole is recessed to form an arc surface A, and a radian of the arc surface A is matched with a radian of the adjacent connecting hole A, connecting hole B or central water flow hole. The connecting holes A and the central water flow holes are staggered, and the connecting holes B are formed in the enclosing portions at a center of the connecting plate.

### Example 8

This example provides a pressurized water reactor core, which uses the fuel assembly provided in the above example. Different fuel assemblies in the reactor core may use fuels with different enrichments. During refueling, a plurality of the fuel assemblies are removed, and a plurality of new fuel assemblies are installed, thereby ensuring an appropriate fuel utilization. By reasonably arranging positions of the fuel assemblies with different enrichments, the hot spot factor and the nuclear enthalpy rise factor of the reactor core are reduced, so that the whole reactor core has a high power level.

The fuel assembly spacer grid, the fuel assembly and the pressurized water reactor core provided by the present disclosure are applicable to Generation III pressurized water reactors and Generation II+ pressurized water reactors. The mixing performance of the fuel assembly spacer grid, the heat transfer capacity of the coolant and the thermal performance of the nuclear fuel assembly can be improved, which is beneficial to improve the power level of the whole reactor core.

The specific embodiments described above have further explained the objectives, technical solutions and beneficial effects of the present disclosure in detail. It should be understood that the above is only specific embodiments of the present disclosure, and is not intended to limit the protection scope of the present disclosure. Any modification, equivalent substitution, improvement and the like made within the spirit and principle of the present disclosure shall fall within the protection scope of the present disclosure.

## Claims

1. A fuel assembly spacer grid, arranged in an axial direction of a fuel assembly, comprising inner straps and outer straps; wherein the inner straps and the outer straps are orthogonally inserted into each other and are fixed at intersections by welding to form a plurality of fuel rod cells; the inner straps are located inside the fuel rod cells, and the outer straps are located at peripheries of the fuel rod cells; mixing vanes are stamped on each inner strap, and the mixing vanes are located on an upper end of the inner strap; upper and lower ends of each outer strap are respectively provided with guide vanes bent inward, and the guide vanes and the outer strap form an integral structure; and each mixing vane of the inner strap is bent N times to form an "S" shape when viewed from the side, wherein N≥2.

2. The fuel assembly spacer grid according to claim 1, wherein an included angle between each bend of the N bends and an axial direction of the fuel assembly spacer grid is 20 to 40°.

3. The fuel assembly spacer grid according to claim 2, wherein the first bend is along a first horizontal baseline where a root of the mixing vane contacts an upper edge of the inner strap or along a first oblique baseline that forms an included angle of 10 to 20° with the first horizontal baseline; the second bend is along a second horizontal baseline or along a second oblique baseline that forms an included angle of 10 to 20° with the second horizontal baseline; a spacing between the second horizontal baseline and the first horizontal baseline is 2 to 5 mm; a spacing between the second oblique baseline and the first oblique baseline is 2 to 5 mm; a distance between a horizontal baseline of the N^{th} bend and a horizontal baseline of the (N-1)^{th} bend is 2 to 5 mm; a distance between an oblique baseline of the N^{th} bend and an oblique baseline of the (N-1)^{th} bend is 2 to 5 mm; an angle of the N^{th} bend is smaller than an angle of the (N-1)^{th} bend; and all the bends are smooth transitions.

4. The fuel assembly spacer grid according to claim 3, wherein the inner strap is further provided with springs; the springs are stamped on a wall surface of the inner strap, the springs are located at a middle of the inner strap, two ends of each spring are connected with the inner strap, and a middle part of the spring protrudes from a surface of the inner strap to form an arch structure configured to clamp the fuel rod; the springs are arranged along an axial direction of the fuel rod cell; each arch structure is provided with a contact region at a position in contact with the fuel rod, and the contact region has a total length of 4 mm to 12 mm.

5. The fuel assembly spacer grid according to claim 4, wherein first dimples are stamped on the inner strap, and the first dimples are located on an upper part and a lower part of the inner strap; an upper edge and a lower edge of the first dimple located on the upper part of the inner strap and an upper edge and a lower edge of the first dimple located on the lower part of the inner strap are respectively provided with stamped grooves, the stamped grooves are stamped in the inner strap, and a distance between a horizontal line of an upper edge of the inner strap and an upper edge of the stamped groove nearest thereto is greater than an axial height of the first dimple, wherein the axial height of the first dimple refers to an axial length of the first dimple along the fuel rod cell.

6. The fuel assembly spacer grid according to claim 5, wherein the mixing vanes work synergistically with the guide vanes; when a coolant flows through the mixing vanes from bottom to top in the fuel assembly, a direction of the coolant is changed to produce a first lateral flow; when the coolant flows through the guide vanes from bottom to top in the fuel assembly, the direction of the coolant is changed to produce a second lateral flow; when projection vectors of the first lateral flow and the second lateral flow in a lateral flow direction of the coolant are in opposite directions, the mixing vanes and the guide vanes are in conflicting directions; when the projection vectors of the first lateral flow and the second lateral flow in the lateral flow direction of the coolant are in a same direction, the mixing vanes and the guide vanes are in matched directions; when the mixing vanes and the guide vanes are in matched directions, the guide vanes have a height of H1; when the mixing vanes and the guide vanes are in conflicting directions, the guide vanes have a height of H2; H2<H1; a size of H1 is 6 mm to 10 mm; a size of H2 is 2 mm to 6 mm; and the height of the guide vane is a projection distance between a vertex of the guide vane and a horizontal baseline where a start point of the bend of the guide vane contacts the outer strap along a vertical direction.

7. The fuel assembly spacer grid according to claim 6, wherein the contact region is a flat surface or an arc surface wrapping the fuel rod.

8. The fuel assembly spacer grid according to claim 7, wherein upper and lower ends of each spring on the inner strap are respectively provided with hole structures having a hole in a shape of one of a circle, an ellipse, an isosceles triangle and a rectangle; wherein three vertices of the isosceles triangle are all chamfered; four vertices of the rectangle are all chamfered; and a sum of surface areas of the upper and lower holes is not greater than 50% of an area of the spring.

9. The fuel assembly spacer grid according to claim 8, wherein widths of the upper and lower ends of the spring are respectively greater than a width of a middle region of the spring, and a minimum width of the middle region of the spring is respectively not smaller than 1/3 of the widths of the upper and lower ends; or
the widths of the upper and lower ends of the spring are respectively smaller than the width of the middle region of the spring; or
the widths of the upper and lower ends of the spring are respectively equal to the width of the middle region of the spring.

10. The fuel assembly spacer grid according to any one of claims 1 to 9, wherein upper and lower ends of the inner strap are provided with trapezoidal guide vane support structures at positions in contact with the guide vanes, the guide vane support structures and the inner strap form an integral structure, and the guide vanes each abut against the corresponding guide vane support structure.

11. The fuel assembly spacer grid according to claim 10, wherein a top end of the guide vane support structure and an inner side of the corresponding guide vane are fixed into an integral structure through welding.

12. A fuel assembly, comprising a plurality of guide tubes, an instrumentation tube and fuel assembly spacer grids according to any one of claims 1 to 11 arranged along an axial direction of the fuel assembly, wherein cells of the fuel assembly spacer grids clamp fuel rods, and mixing vanes of different spacer grids continuously mix a coolant to enhance heat transfer capacity of the coolant; the guide tubes and the instrumentation tube are uniformly distributed in the cells; a reactor core measuring instrument is inserted into the instrumentation tube; a top nozzle is located at a top end of the fuel assembly; and a bottom nozzle is located at a bottom of the fuel assembly.

13. The fuel assembly according to claim 12, wherein fuel rod claddings, the guide tubes and the instrumentation tube are all made of a fully recrystallized zirconium-tin-niobium alloy; and the fully recrystallized zirconium-tin-niobium alloy comprises: 0.80% to 1.20% of tin, 0.90% to 1.25% of niobium, 0.12% to 0.45% of iron, 0.06% to 0.15% of oxygen, less than 0.015% of carbon, less than 0.008% of nitrogen and the balance of zirconium in mass percentages.

14. The fuel assembly according to claim 13, wherein the bottom nozzle has a function of filtering out foreign matters; and the bottom nozzle comprises a plurality of blades with axes parallel with each other and a plurality of rib assemblies with axes parallel with each other, the plurality of rib assemblies and blades are staggered to form a lattice structure, and the axes of the rib assemblies are perpendicular to the axes of the blades.

15. The fuel assembly according to claim 14, wherein the blades of the bottom nozzle comprise a plurality of protruding members with a same protruding direction, and every two adjacent protruding members are connected by a straight section; an upper end surface and a lower end surface of the straight section are respectively provided with recesses, and an opening direction of each recess is perpendicular to the protruding direction of the protruding members; the rib assembly comprises an upper rib and a lower rib that are symmetrical, and opposite surfaces of the upper rib and the lower rib are each provided with clamping grooves corresponding to the blades in quantity; the upper rib is located above the blade, and the clamping grooves of the upper rib are clamped with the recesses in the upper end surface of the blade in an occlusal manner; and the lower rib is located below the blade, and the clamping grooves of the lower rib are clamped with the recesses in the lower end surface of the blade in an occlusal manner.

16. The fuel assembly according to claim 15, wherein the top nozzle comprises a connecting plate, enclosure plates fixed to edges of the connecting plate and frame plates fixed to the enclosure plates, the connecting plate is provided with connecting holes A for mounting the guide tubes of the fuel assembly and a connecting hole B for mounting the instrumentation tube, a plurality of elongated water flow holes are uniformly formed in the connecting plate, the water flow holes comprise water flow holes A and water flow holes B, and an included angle of greater than 0° is formed between axes of the water flow hole A and the water flow hole B; on the connecting plate, a connecting portion is formed among two water flow holes A and two water flow holes B that are adjacent along an axial direction; on the connecting plate, an enclosing portion is formed among two water flow holes A and two water flow holes B that are adjacent along a radial direction; the connecting plate is further provided with central water flow holes, and the connecting holes A, the connecting holes B and the central water flow holes are respectively arranged in the enclosing portions; a side surface of the water flow hole is recessed to form an arc surface A, and a radian of the arc surface A is matched with a radian of the adjacent connecting hole A, connecting hole B or central water flow hole; and the connecting holes A and the central water flow holes are staggered, and the connecting holes B are formed in the enclosing portions at a center of the connecting plate.

17. The fuel assembly according to claim 13, wherein two types of fuel rods are provided; the first type of fuel rods adopt UO₂ fuel pellets, and the second type of fuel rods adopt UO₂-Gd₂O₃ burnable poison fuel pellets; wherein a mass percentage of Gd₂O₃ in the UO₂-Gd₂O₃ burnable poison fuel pellets is 2% to 12%; and the UO₂ fuel pellets have a grain size of 25 µm to 60 µm.

18. The fuel assembly according to claim 17, wherein the fuel pellet in the fuel rod is compressed by a spring, the fuel rod is filled with helium, and the spring is a variable pitch spring; a pitch from a left end of the spring and a right end of the spring to a midpoint of the spring increases, the pitch of the spring varies from 5 mm to 12 mm, the pitch keeps constant after reaching the maximum pitch, and 5 to 8 coils with a variable pitch are respectively provided between the left end of the spring and the midpoint of the spring and between the right end of the spring and the midpoint of the spring.

19. The fuel assembly according to claim 12, wherein the fuel assembly contains the guide tubes for accommodating insertion of nuclear reactor control rods; an inner side of a lower part of each guide tube is provided with an inner sleeve, and the guide tube and the inner sleeve are connected through expansion or welding to form a control rod cushion section.

20. The fuel assembly according to claim 12, wherein the reactor core measuring instrument is inserted from an upper part of the instrumentation tube or from a lower part of the instrumentation tube.

21. A pressurized water reactor core, using a plurality of fuel assemblies according to any one of claims 12 to 20, wherein one reactor core has the fuel assemblies with different enrichments, and during refueling, a plurality of the fuel assemblies are removed, and a plurality of new fuel assemblies are installed.
